# EUROPÄISCHE PATENTSCHRIFT

(11) **EP 3 892 513 B1**
(45) Veröffentlichungstag und Bekanntmachung des Hinweises auf die Patenterteilung: **30.11.2022**
(21) Anmeldenummer: 21161016.7
(22) Anmeldetag: 05.03.2021
(51) Int. Cl.: B61D 37/00, B60N 3/00, B64D 11/06

(54) **FAHRGASTTISCH**
PASSENGER TABLE
TABLE DU PASSAGER

(30) Priorität: 06.04.2020 DE 102020204409
(43) Veröffentlichungstag der Anmeldung: 13.10.2021
(73) Patentinhaber: Siemens Mobility GmbH, 81739 München (DE)
(72) Erfinder: Schmidt, Gerhard, 45127 Essen (DE)

(56) Entgegenhaltungen:
- DE-A1-102015 204 705
- DE-U1- 9 303 108
- SU-A1- 1 094 785

## Beschreibung

Die Erfindung bezieht sich auf einen Fahrgasttisch mit einer ortsfesten Tischplatte und einer Tischauszugsplatte, die mittels zweier quer zu einer Auszugsrichtung voneinander beabstandeter Getriebe aus einer zurückgezogenen Position unterhalb der Tischplatte in eine Gebrauchsposition, bei der sich die Tischauszugsplatte an eine zugeordnete äußere Kante der Tischplatte anschließt, überführbar ist.

Ein solcher Fahrgasttisch ist beispielsweise aus der DE 10 2015 204 705 A1 oder aus der DE 93 03 108 U1 bekannt. Fahrgasttische an Sitzgruppen von Schienenfahrzeugen sind häufig in ihrer festen Tiefe begrenzt, um genügend Raum für einen Zugang zu Fahrgastsitzen freizuhalten. Um dennoch eine nutzbare Tischfläche nahe an die Sitzposition heranführen zu können, wird die Tischauszugsplatte verwendet, die sich in ihrer Gebrauchsposition unmittelbar an die feste Tischplatte anschließt und somit insgesamt eine größere verfügbare Tischfläche bereitstellt.

Der Einsatz der zwei voneinander beabstandeten Getrieben, die sich typischerweise im seitlichen Bereich, der Tischauszugsplatte befinden, ermöglicht eine gute Aufnahme vertikaler Lasten. Die Bewegung der Tischauszugsplatte erfolgt typischerweise wenigstens abschnittsweise geradlinig oder in einem Wendepunkt. Dies hat zur Folge, dass nicht durchgehend eine Momentanpolachse im endlichen, senkrecht zur Bewegungsebene, vorhanden ist. Damit besteht die Möglichkeit, dass sich die Tischauszugsplatte undefiniert um eine Achse parallel zur vorgesehenen Bewegungsebene der Tischauszugsplatte verdrehen und dabei verkanten kann.

Ausgehend hiervon liegt der Erfindung die Aufgabe zugrunde, bei dem eingangs genannten Fahrgasttisch ein Verkanten des Tischauszugsplatte bei deren Bewegung aus der zurückgezogenen Position in die Gebrauchsposition oder umgekehrt zu erschweren.

Diese Aufgabe wird gelöst durch einen Fahrgasttisch mit den Merkmalen des Anspruchs 1.

Dieser zeichnet sich gegenüber dem eingangs beschriebenen Fahrgasttisch dadurch aus, dass die zwei Getriebe jeweils mindestens einen Hebel umfassen, dessen eines Ende um eine erste Achse drehbar gegenüber der Tischplatte und dessen anderes Ende um eine zweite Achse drehbar gegenüber der Tischauszugsplatte gelagert ist, die zweite Achse bei einer Bewegung der Tischauszugsplatte von der Gebrauchsposition zu der zurückgezogenen Position oder umgekehrt eine kontinuierliche Drehbewegung entlang eines Kreissegments beschreibt, dessen Radius durch den Abstand der ersten Achse von der zweiten Achse bestimmt ist, und Rotationsbewegungen der jeweiligen Hebel der Getriebe über eine in Querrichtung der Auszugsrichtung der Tischauszugsplatte auf der ersten Achse verlaufende, torsionssteife Koppelstange miteinander verbunden sind.

Die vorgesehene Kopplung der beiden Hebel mit Hilfe der torsionssteifen Koppelstange wirkt einem Verkanten der Tischauszugsplatte bei deren Bewegung wirksam entgegen. Folge ist es, dass keine Führungselemente für die Bewegung der Tischauszugsplatte erforderlich sind, welche Biegemomente zur Verhinderung des Verkantens der Tischauszugsplatte aufnehmen müssen. Damit lassen sich Führungselemente wesentlich einfacher gestalten, beispielsweise als offene Rollenführung.

Bevorzugt ist jeweils das eine Ende des Hebels unmittelbar an der Tischplatte und das andere Ende des Hebels unmittelbar an der Tischauszugsplatte drehbar gelagert. Es ist jedoch hervorzuheben, dass die Vorgehensweise, eine torsionssteife Koppelstange vorzusehen und das andere Ende des Hebels eine Kreissegmentbewegung vornehmen zu lassen, auch auf jedwede Komponenten von Getrieben, die bei Fahrgasttischen vorgesehen sind, anwendbar ist.

Vorteilhafterweise sind die durch die Koppelstange verbundenen Hebel direkt in die Getriebe der beiden Seiten integriert, in dem Sinn, dass sie den Freiheitsgrad auf genau eins, also die definierte Bewegung zwischen zurückgezogener Position und Gebrauchsposition, einstellen.

Alternativ können auch die Getriebe unabhängig von den gekoppelten Hebeln bereits eine definierte Bewegung mit jeweils einem Freiheitsgrad herstellen, so dass die Hebel nur die Funktion haben, die Bewegungen der beiden Seiten zu synchronisieren.

Vorteilhafterweise weisen die zwei Getriebe zur Führung der Tischauszugsplatte jeweils eine Kurvenrolle auf, die auf einer Führungsbahn abrollt. Dabei können die Führungsbahnen jeweils als in Seitenflächen der Tischauszugsplatte vorgesehene Nuten ausgebildet sein und die Kurvenrollen jeweils an der Tischplatte gelagert sein. Die damit realisierte Führung für die Tischauszugsplatte ist kostengünstig und fertigungstechnisch einfach umzusetzen.

Der jeweilige Hebel kann derart unterhalb der Tischplatte angeordnet und gelagert sein, dass er bei Erreichen der Gebrauchsposition der Tischauszugsplatte rotatorisch bezüglich dieser festgelegt ist und so das Biegemoment des Überstandes über die Kurvenrolle aufnimmt.

Vorteilhafterweise ist die Kurvenrolle an der Tischplatte derart angeordnet und gelagert, dass sie in jeder bei einer Bewegung der Tischauszugsplatte aus der zurückgezogenen Position in die Gebrauchsposition eingenommenen Position der zweiten Drehachse von der zweiten Drehachse beabstandet ist. Durch diese Maßnahme wird eine Abstützbasis für die Tischauszugsplatte ermöglicht, welche die Tischauszugsplatte kontinuierlich in einer definierten Winkellage, d.h. mit nur einem resultierenden Freiheitsgrad, führt.

Ein Ausführungsbeispiel der Erfindung wird nachfolgend unter Bezugnahme auf die Zeichnung noch näher erläutert. Es zeigen:
- Figur 1: eine schematische Querschnittsansicht einer Tischauszugsplatte in Kombination mit einer ortsfesten Tischplatte, wobei sich die Tischauszugsplatte in einer Gebrauchsposition befindet,
- Figur 2: eine schematische Querschnittsansicht der Tischauszugsplatte von Figur 1 in Kombination mit einer ortsfesten Tischplatte, wobei sich die Tischauszugsplatte in einer Zwischenposition befindet,
- Figur 3: eine schematische Querschnittsansicht der Tischauszugsplatte von Figur 1 in Kombination mit einer ortsfesten Tischplatte, wobei sich die Tischauszugsplatte in einer zurückgezogenen Position befindet und
- Figur 4: eine perspektivische Ansicht auf die Tischauszugsplatte der Figuren 1 bis 3, mit zugehörigen Getrieben zum Anbau an eine ortsfeste Tischplatte.

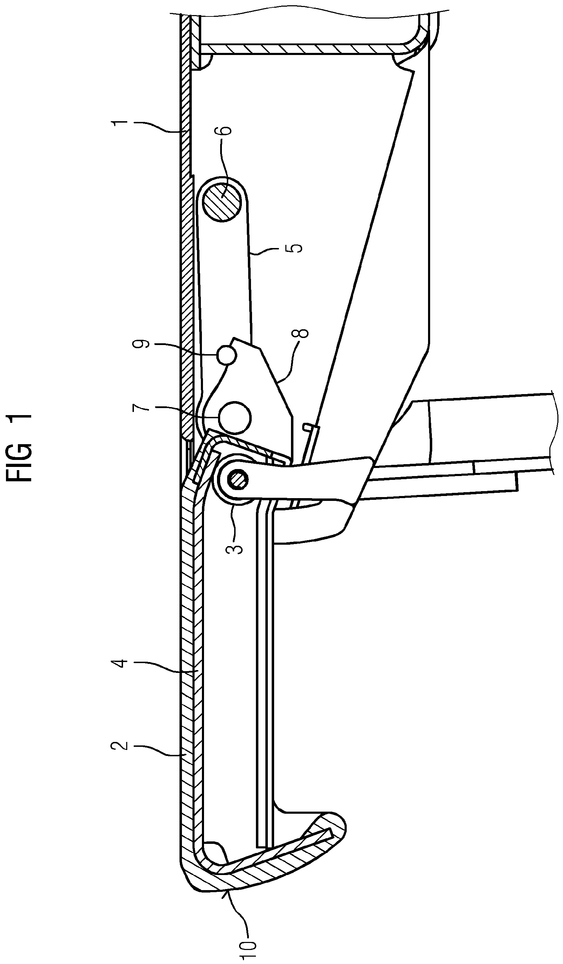

Figur 1 zeigt einen Fahrgasttisch beispielsweise zum Einsatz in einem Schienenfahrzeug. Der Fahrgasttisch umfasst eine in dem Fahrzeug fest montierte Tischplatte 1. Eine verfügbare Oberfläche des Fahrgasttisches kann mit Hilfe einer Tischauszugsplatte 2 vergrößert werden. In Figur 1 ist die relative Position der Tischauszugsplatte 2 in ihrer Gebrauchsstellung zu der Tischplatte 1 dargestellt.

An der Tischplatte 1 ist eine Kurvenrolle 3 drehbar gelagert, die in eine Führungsbahn 4 eingreift und entlang der Führungsbahn 4 abrollt, wenn die Tischauszugsplatte 2 beispielweise aus ihrer Gebrauchsposition in eine zurückgezogene Position unterhalb der Tischplatte 1 verbracht wird. Die Führungsbahn 4 ist als Nut ausgeführt, die in eine Seitenfläche der Tischauszugsplatte 2 eingebracht ist und im Wesentlichen linear verläuft, und zwar parallel zu einer Oberfläche der Tischauszugsplatte 2.

Ein Hebel 5 ist mit seinem einen Ende um eine von einer Koppelstange 6 festgelegte erste Achse drehbar gegenüber der Tischplatte 1 gelagert. Das andere Ende des Hebels 5 ist über eine zweite Achse 7 drehbar an einer Lasche 8 gelagert, die mit der Tischauszugsplatte 2 fest verbunden und von dieser aus, bezogen auf die Tischplatte 1, einwärts gerichtet angeordnet ist.

In der dargestellten Gebrauchsposition der Tischauszugsplatte 2 stößt die Lasche 8 gegen einen Anschlag 9, der in einem Abstand zu der Achse 7 an dem Hebel 5 vorgesehen ist. Insofern ist der Freiheitsgrad für eine Bewegung der Tischauszugsplatte 2 beschränkt.

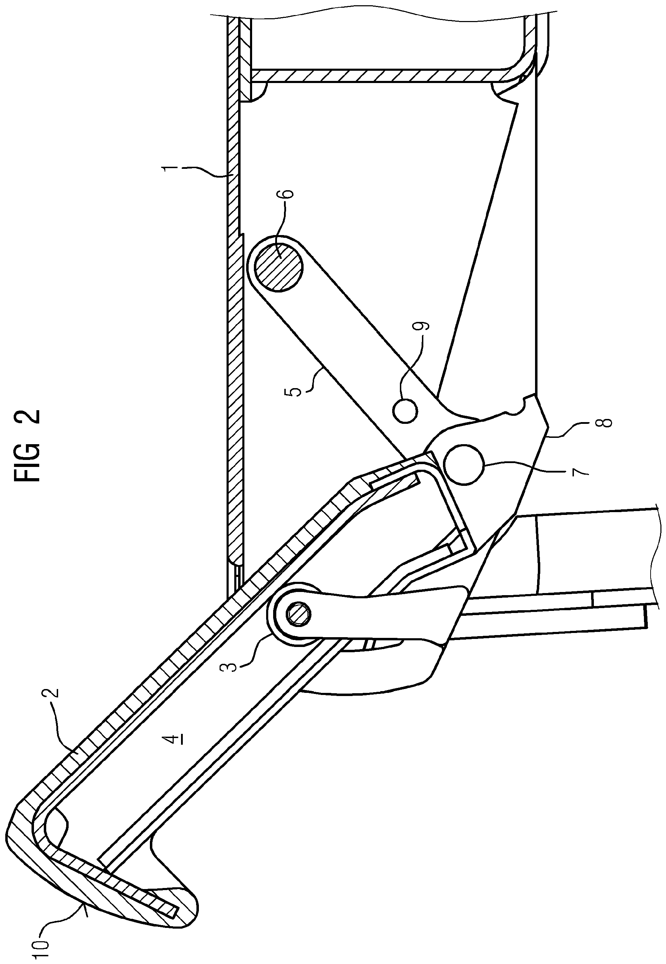

Figur 2 zeigt die Tischauszugsplatte 2 in einer Zwischenposition, bei der sie die Gebrauchsposition verlassen, die zurückgezogene Position jedoch noch nicht erreicht hat. Ersichtlich hat sich die Kurvenrolle 3 eine Strecke entlang der Führungsbahn 4 in Richtung auf eine Stirnfläche 10 der Tischauszugspatte 2 bewegt. Der Hebel 5 hat eine Drehbewegung um die Achse 6 vollführt, bei der die Achse 7 ein Kreissegment beschreibt, dessen Radius durch den Abstand der beiden Achsen bestimmt ist.

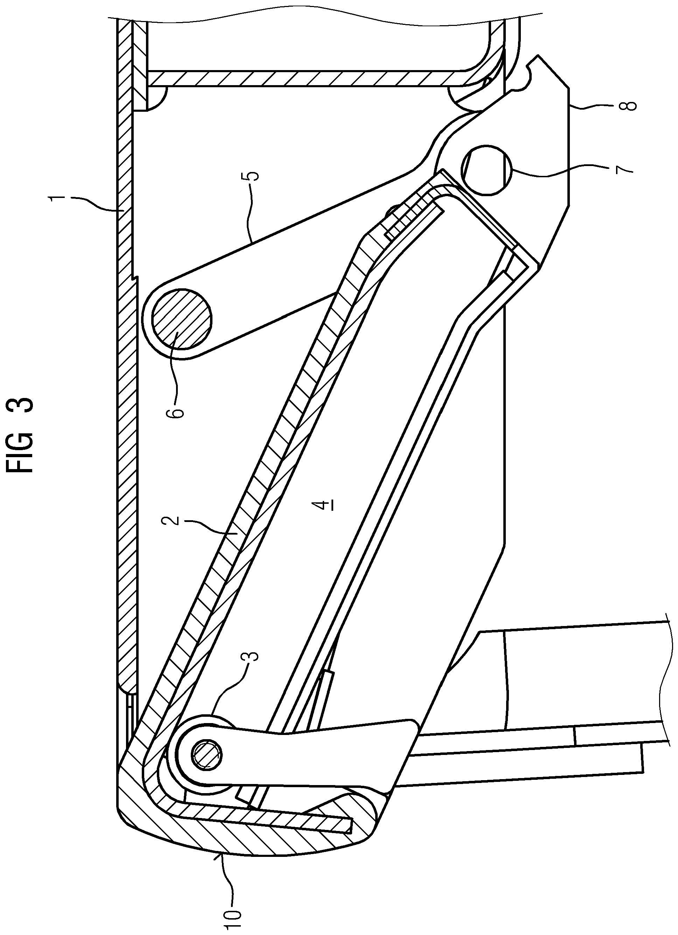

Figur 3 veranschaulicht die Tischauszugsplatte 2 in ihrer zurückgezogenen Position, bei der sie im Wesentlichen unterhalb der Tischplatte 1 untergebracht ist. Bei einem Übergang von der Position der Tischauszugsplatte 2 in Figur 2 zu Figur 3 wird die Kreisbewegung der zweiten Achse 7 weiter fortgesetzt.

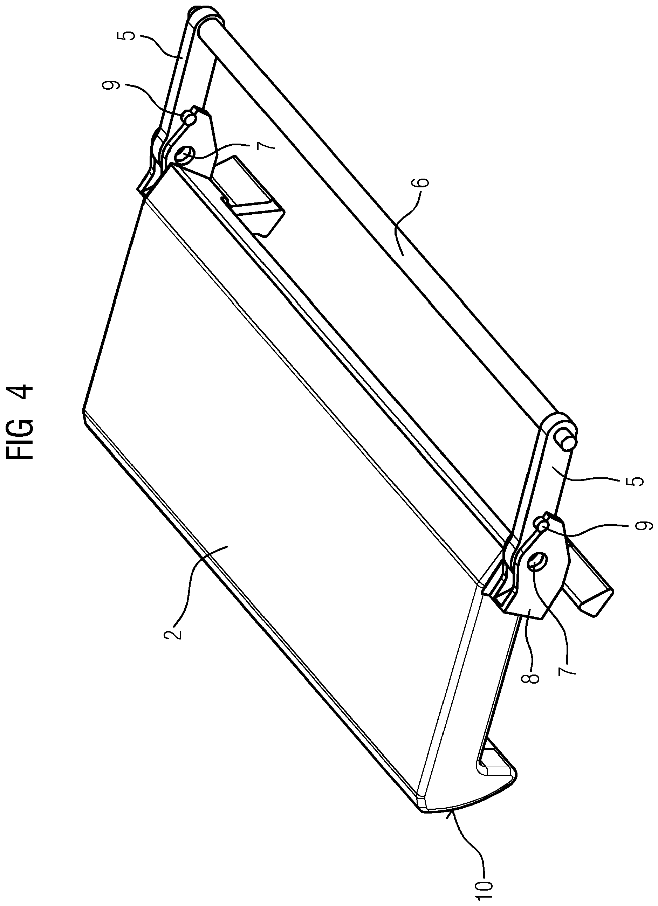

Aus Figur 4 wird ersichtlich, dass sich die Koppelstange 6 quer zu einer Auszugsrichtung der Tischauszugsplatte 2 erstreckt und dass zum Steuern der Bewegung der Tischauszugsplatte 2 zwischen der Gebrauchsposition und der zurückgezogenen Position zwei identisch wirkende Getriebe vorgesehen sind, welche jeweils die zuvor erläuterten Komponenten, nämlich die Kurvenrolle 3, die Führungsbahn 4, die Lasche 8, den Anschlag 9, den Hebel 5 und die Achse 7 umfassen. Es ist hervorzuheben, dass die Koppelstange 6 torsionssteif ausgebildet ist, so dass Rotationsbewegungen der jeweiligen Hebel der Getriebe miteinander verbunden sind und damit ein Verkanten der Tischauszugsplatte 2 bei ihrem Übergang aus der Gebrauchsposition in die zurückgezogene Position oder umgekehrt wirksam verhindert wird.

## Patentansprüche

1. Fahrgasttisch mit einer ortsfesten Tischplatte (1) und einer Tischauszugsplatte (2), die mittels zweier quer zu einer Auszugsrichtung voneinander beabstandeter Getriebe aus einer zurückgezogenen Position unterhalb der Tischplatte (1) in eine Gebrauchsposition, bei der sich die Tischauszugsplatte (2) an eine zugeordnete äußere Kante der Tischplatte (1) anschließt, überführbar ist,
wobei die zwei Getriebe jeweils mindestens einen Hebel (5) umfassen, dessen eines Ende um eine erste Achse drehbar gegenüber der Tischplatte (1) und dessen anderes Ende um eine zweite Achse (7) drehbar gegenüber der Tischauszugsplatte (2) gelagert ist, und
die zweite Achse (7) bei einer Bewegung der Tischauszugsplatte (2) von der Gebrauchsposition zu der zurückgezogenen Position oder umgekehrt eine kontinuierliche Drehbewegung entlang eines Kreissegments beschreibt, dessen Radius durch den Abstand der ersten Achse von der zweiten Achse (7) bestimmt ist, **dadurch gekennzeichnet, dass** Rotationsbewegungen der jeweiligen Hebel (5) der Getriebe über eine in Querrichtung der Auszugsrichtung der Tischauszugsplatte auf der ersten Achse verlaufende, torsionssteife Koppelstange (6) miteinander verbunden sind.

2. Fahrgasttisch nach Anspruch 1,
**dadurch gekennzeichnet, dass**
jeweils das eine Ende des Hebels (5) unmittelbar an der Tischplatte (1) und das andere Ende des Hebels (5) unmittelbar an der Tischauszugsplatte (2) drehbar gelagert ist.

3. Fahrgasttisch nach Anspruch 1 oder 2,
**dadurch gekennzeichnet, dass**
die zwei Getriebe zur Führung der Tischauszugsplatte (2) jeweils eine Kurvenrolle (3) aufweisen, die auf einer Führungsbahn (4) abrollt.

4. Fahrgasttisch nach Anspruche 3,
**dadurch gekennzeichnet, dass**
die Führungsbahnen (4) jeweils als in Seitenflächen der Tischauszugsplatte (2) vorgesehene Nuten ausgebildet sind und die Kurvenrollen (3) jeweils an der Tischplatte (1) gelagert sind.

5. Fahrgasttisch nach einem der Ansprüche 1 bis 4,
**dadurch gekennzeichnet, dass**
der jeweilige Hebel (5) derart unterhalb der Tischplatte (1) angeordnet und gelagert ist, dass er bei Erreichen der Gebrauchsposition der Tischauszugsplatte (2) festgelegt ist.

6. Fahrgasttisch nach einem der Ansprüche 1 bis 5,
**dadurch gekennzeichnet, dass**
die Kurvenrolle (3) an der Tischplatte (1) derart angeordnet und gelagert ist, dass sie in jeder bei einer Bewegung der Tischauszugsplatte (2) aus der zurückgezogenen Position in die Gebrauchsposition eingenommenen Position der zweiten Drehachse (7) von der zweiten Drehachse (7) beabstandet ist.

## Claims

1. Passenger table having a positionally fixed tabletop (1) and an extendable tabletop (2), which is transferable, by means of two mechanisms spaced apart from one another transversely to an extension direction, from a retracted position beneath the tabletop (1) into a use position in which the extendable tabletop (2) adjoins an associated outer edge of the tabletop (1),
wherein the two mechanisms each comprise at least one lever (5), one end of which is mounted so as to be rotatable about a first axis with respect to the tabletop (1) and the other end of which is mounted so as to be rotatable about a second axis (7) with respect to the extendable tabletop (2), and,
when the extendable tabletop (2) is moved from the use position to the retracted position or vice versa, the second axis (7) describes a continuous rotary movement along a circle segment, the radius of which is determined by the distance of the first axis from the second axis (7), **characterized in that** rotational movements of the respective levers (5) of the mechanisms are linked together via a torsionally stiff coupling rod (6) that extends on the first axis in the transverse direction to the extension direction of the extendable tabletop.

2. Passenger table according to Claim 1,
**characterized in that**
in each case one end of the lever (5) is rotatably mounted directly on the tabletop (1) and the other end of the lever (5) is rotatably mounted directly on the extendable tabletop (2) .

3. Passenger table according to Claim 1 or 2,
**characterized in that**
the two mechanisms each have, for guiding the extendable tabletop (2), a cam roller (3) which rolls on a guide track (4) .

4. Passenger table according to Claim 3,
**characterized in that**
the guide tracks (4) are each formed as slots provided in lateral faces of the extendable tabletop (2) and the cam rollers (3) are each mounted on the tabletop (1).

5. Passenger table according to one of Claims 1 to 4, **characterized in that**
the respective lever (5) is arranged and mounted beneath the tabletop (1) such that it is fixed when the extendable tabletop (2) reaches the use position.

6. Passenger table according to one of Claims 1 to 5, **characterized in that**
the cam roller (3) is arranged and mounted on the tabletop (1) such that, in each position of the second rotational axis (7) taken up when the extendable tabletop (2) is moved from the retracted position into the use position, it is at a distance from the second rotational axis (7).

## Revendications

1. Table de passager ayant un plateau (1) de table fixe en position et un plateau (2) de table sortant, qui peut, au moyen de deux mécanismes à distance l'un de l'autre transversalement à un direction de sortie, passer d'une position escamotée en-dessous du plateau (1) de la table à une position d'utilisation, dans laquelle le plateau (2) sortant se raccorde à un bord extérieur associé du plateau (1) de la table,
dans laquelle
les deux mécanismes comprennent chacun au moins un levier (5), dont une extrémité est montée tournante autour d'un premier axe par rapport au plateau (1) de la table et dont l'autre extrémité est montée tournante autour d'un deuxième axe (7) par rapport au plateau (2) sortant, et
le deuxième axe (7) décrit, lors d'un déplacement du plateau (2) de table sortant de la position d'utilisation à la position escamotée ou inversement, un mouvement de rotation continu le long d'un segment de cercle, dont le rayon est déterminé par la distance entre le premier axe et le deuxième axe (7), **caractérisé en ce que** des mouvements de rotation des leviers (5) respectives des mécanismes sont reliés entre eux par une barre (6) d'accouplement rigide en torsion, s'étendant sur le premier axe dans la direction transversale à la direction de sortie du plateau de table sortant.

2. Table de passager suivant la revendication 1,
**caractérisée en ce que**
respectivement la une extrémité du levier (5) est montée tournante directement sur la plateau (1) de la table et l'autre extrémité du levier (5) est montée tournante indirectement sur le plateau (2) de table sortant.

3. Table de passager suivant la revendication 1 ou 2, **caractérisée en ce que**
les deux mécanismes ont, pour le guidage du plateau (2) de table sortant, respectivement un rouleau (3) de guidage, qui roule sur une voie (4) de guidage.

4. Table de passager suivant la revendication 3,
**caractérisée en ce que**
les voies (4) de guidage comprennent respectivement des rainures prévues dans des surfaces latérales du plateau (2) de table sortant et les rouleaux (3) de guidage sont montés respectivement sur le plateau (1) de la table.

5. Table de passager suivant l'une des revendications 1 à 4, **caractérisée en ce que**
le levier (5) respectif est disposé et monté en-dessous du plateau (1) de la table, de manière à être fixé lorsqu'est atteinte la position d'utilisation du plateau (2) de table sortant.

6. Table de passager suivant l'une des revendications 1 à 5, **caractérisée en ce que**
les rouleaux (3) de guidage du plateau (1) de la table sont disposés et montés de manière à être à distance du deuxième axe (7) de rotation, dans chaque position du deuxième axe (7) de rotation prise lors du passage du plateau (2) de table sortant de la position escamotée à la position d'utilisation.
